# EUROPEAN PATENT APPLICATION

(11) **EP 1 345 456 A2**
(43) Date of publication of application: **17.09.2003**
(21) Application number: 02259027.7
(22) Date of filing: 31.12.2002
(51) Int. Cl.: H04Q 3/00

(54) **Mobile services platform architecture**

(30) Priority: 14.03.2002 US 364948 P; 31.10.2002 US 286509
(71) Applicant: Openwave Systems Inc., Redwood City, CA 94063 (US)
(72) Inventor: Martin, Bruce K., Jr., Palo Alto, CA 94306 (US); Luna, Michael E. S., Carnation, WA 98014 (US); King, Peter F., Half Moon Bay, CA 94019 (US); Valloppillil, Vinod, Foster City, CA 94404 (US); Ramasubramani, Seetharaman, San Jose, CA 95129 (US)
(74) Representative: McLeish, Nicholas Alistair Maxwell

(57) **Abstract**

A mobile services platform (MSP) enables mobile clients on a wireless network to access network servers on a wireline computer network. The MSP comprises applications for execution during transactions between mobile clients and network servers in response to requests from mobile clients, and services for automatic invocation during communications between mobile clients and network servers. The MSP also includes a network services management subsystem that includes a proxy to proxy requests and responses between network servers and mobile clients. The MSP also includes a subscriber and service management subsystem to manage mobile subscriber data and subscriptions and to manage the applications and services to which subscribers have access. The MSP further includes a developer services management subsystem to enable and control access by external entities to subscriber-related information in the mobile services platform, and an administration subsystem to enable administrative operations to be performed.

## Description

This application claims the benefit of U.S. Provisional Patent application no. 60/364,948, filed on March 14, 2002, which is incorporated herein by reference.

### FIELD OF THE INVENTION

At least one embodiment of the present invention pertains to computer and communications networks, and more particularly, to a mobile services platform that enables mobile clients on a wireless telecommunications network to access network servers on a wireline computer network.

### BACKGROUND

Personal mobile communication/computing devices, such as cellular telephones, personal digital assistants (PDAs) and two-way pagers, have become ubiquitous in most modern countries. These devices are sometimes collectively called "mobile devices". Many of the latest generation mobile devices provide their users with the ability to access resources on the Internet via wireless telecommunications networks (or simply, "wireless networks"). For example, some of these mobile devices allow their users to access World Wide Web pages, exchange email and download files over the Internet.

A device called a gateway is often used to enable these mobile devices to do this. Typically, the gateway is (or includes) a server computer system that is coupled between the wireless network and the Internet. The gateway typically translates/converts between the languages and protocols used on the Internet (e.g., HTTP and HTML) and the languages and protocols used by the mobile devices (e.g., WAP and WML). Such gateways are produced by Openwave Systems Inc. of Redwood City, Galifornia. The gateway is typically operated by the communications service provider (CSP), e.g., the operator of the wireless network.

With the introduction of so-called "2.5G" and "3G" mobile devices, mobile devices will have a much broader range of capabilities. It is desirable, therefore, to enable CSPs to provide a broader range of services and applications to mobile devices, so that CSPs can become value-added intermediaries in the network environment.

### SUMMARY

The present invention includes a mobile services platform to enable multiple mobile clients operating on a wireless telecommunications network to access one or more network servers operating on a wireline computer network, where the mobile clients are used by subscribers of wireless telecommunications services. In certain embodiments, the mobile services platform comprises a data communications interface to the wireline computer network, a data communications interface to the wireless telecommunications network, a set of application modules, a set of service modules, a network services management (NSM) subsystem, a subscriber and service management (SSM) subsystem, and an administration subsystem. The application modules provide applications for execution during communications between the mobile clients and the network servers in response to requests from the mobile clients to access the applications. The service modules provide services that are automatically invoked during communications between mobile clients and the network servers. The NSM subsystem includes a proxy to proxy requests and responses between the network servers and the mobile clients. The SSM subsystem manages data relating to the subscribers and subscriptions of the subscribers and determines the applications and services to which the subscribers have access. The administration subsystem enables administrative operations to be performed on the mobile services platform.

Other features of the present invention will be apparent from the accompanying drawings and from the detailed description which follows.

### BRIEF DESCRIPTION OF THE DRAWINGS

One or more embodiments of the present invention are illustrated by way of example and not limitation in the figures of the accompanying drawings, in which like references indicate similar elements and in which:

Figure 1 is a conceptual block diagram illustrating an example of a network environment in which the MSP can be implemented;

Figure 2 illustrates a high-level architecture of the MSP in relation to other network elements;

Figure 3 illustrates the NSM subsystem;

Figure 4 illustrates the SSM subsystem;

Figure 5 illustrates the OA&M subsystem;

Figure 6 illustrates a first example of how the MSP can be implemented in a network environment; and

Figure 7 illustrates a second example of how the MSP can be implemented in a network environment.

### DETAILED DESCRIPTION

Described herein is a mobile services platform (MSP) to enable mobile clients on a wireless telecommunications network ("wireless network") to access network servers on a wireline computer network. Note that in this description, references to "one embodiment" or "an embodiment" mean that the feature being referred to is included in at least one embodiment of the present invention. Further, separate references to "one embodiment" or "an embodiment" in this description do not necessarily refer to the same embodiment; however, such embodiments are also not mutually exclusive unless so stated, and except as will be readily apparent to those skilled in the art from the description. For example, a feature, structure, act, etc. described in one embodiment may also be included in other embodiments. Thus, the present invention can include a variety of combinations and/or integrations of the embodiments described herein.

The MSP described herein enables CSPs to provide a broader range of services and applications to mobile devices, so that CSPs can become value-added intermediaries in the network environment. In at least one embodiment, as described in greater detail below, the MSP includes applications for execution during transactions between mobile clients and network servers in response to requests from mobile clients, and services for automatic invocation during communications between mobile clients and network servers. The MSP also includes a network services management subsystem that includes a proxy to proxy requests and responses between network servers and mobile clients. The MSP further includes a developer services management subsystem to enable and control access by external entities to subscriber-related information in the mobile services platform, and an administration subsystem to enable administrative operations to be performed.

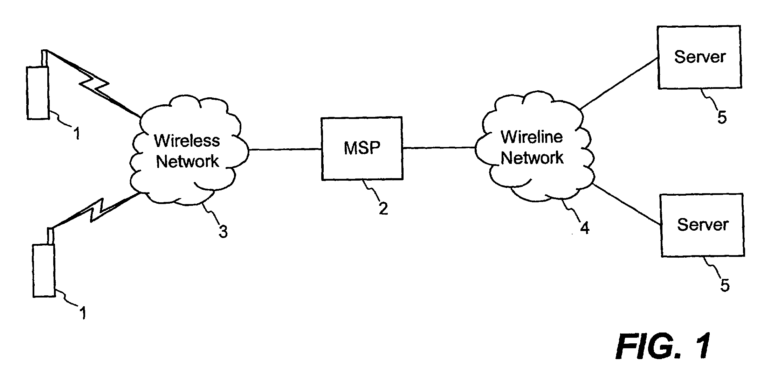

Figure 1 shows an example of a network environment in which the invention can be implemented. As shown, one or more mobile devices 1 are connected to the MSP 2 through a wireless network 3. The mobile devices 1 may include, for example, one or more cellular telephones, personal digital assistants (PDAs), two-way pagers, laptop computers, and/or other similar devices with wireless data communication capability. The MSP 2 is also connected to a wireline computer network ("wireline network") 4, such as the Internet. The wireline network 4 could alternatively be a local area network (LAN), a private wide area network (WAN), or a corporate intranet. A number of network servers 5 are also connected to the wireline network. The mobile devices 1 may operate as clients when interacting with the network servers 5. The network servers 5 may be, for example, World Wide Web servers or other types of content servers.

In general, the MSP 2 controls the connection to the mobile client devices 1 (session management), retrieving content from network servers 5 on behalf of the mobile devices 1 (proxying), and ensuring that the content provided to the mobile devices 1 is in a form that the mobile device 1 can understand (translation). The MSP 2 may also perform many other functions, such as billing, enhanced services, and push content delivery.

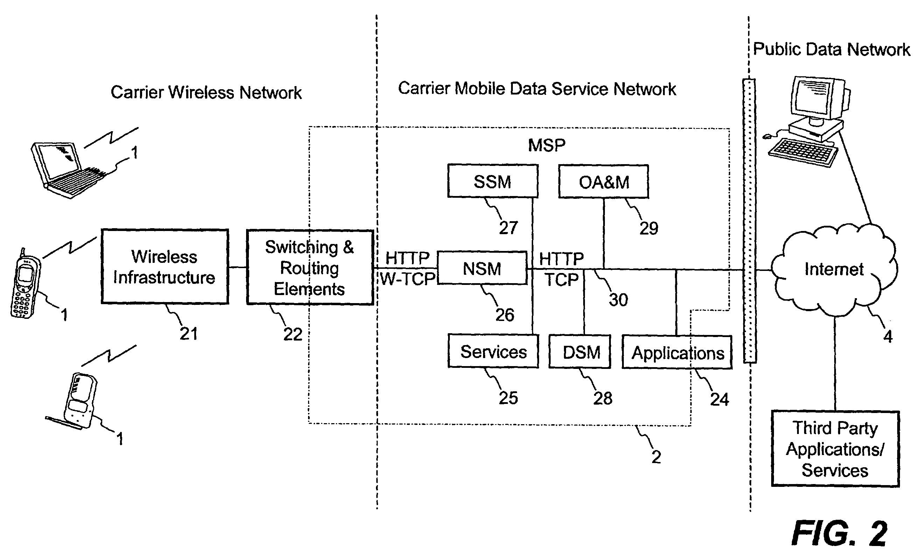

Figure 2 illustrates the functional architecture of the MSP 2 in relation to other network elements, according to certain embodiments of the invention. The MSP 2 is designed to interoperate with 2.5G and 3G wireless networks. The MSP is coupled to the mobile devices 1 through a wireless infrastructure 21 and various switching and routing elements 22, and is also coupled to the wireline network 4, which in the illustrated embodiment is the Internet. Functionally, the wireless infrastructure 21 may be considered to include the mobile devices 1 and the wireless network 3. The wireless network 3 is specific to the CSP and may have any of various different wireless architectures.

The switching and routing elements 22 may also be referred to as the Inter-Working Function (IWF) and are the elements that convert the wireless network-specific data protocols to the industry standard Internet Protocol (IP) based protocols. Depending on CSP infrastructure, the MSP 2 may provide various different components.

In the illustrated embodiment, the MSP 2 includes: a set of one or more application modules 24, a set of one or more service modules 25, a network services management (NSM) subsystem 26, a subscriber and service management (SSM) subsystem 27, a developer services management (DSM) subsystem 28, and an operation administration and management (OA&M) subsystem 29. These components may be contained within a single physical device (e.g., a server computer), or they may be distributed between two or more separate physical devices coupled to each other on a network 30 (as shown), such as a LAN. As shown, these components may communicate with each other using, for example, Hypertext Transport Protocol (HTTP) over Transfer Control Protocol (TCP). The NSM subsystem 26 may communicate with the switching and routing elements 22 using, for example, HTTP over wireless TCP (W-TCP).

Each of the application modules 24 provides an application for execution during communications between mobile devices 1 and network servers 5 in response to requests from the mobile clients 1 to access the applications. Examples of such applications are a home page manager to enable control of a home page of the subscribers, or a download module to enable features and functionality (e.g., ring tones, wallpapers) to be downloaded to mobile clients 1.

The service modules 25 enable the MSP 2 to manage various internal services or third-party services that are invoked automatically (i.e., without any request for the service from a mobile client) during communications between a mobile client 1 and a network server 5. Examples of such services are: a location service broker to provide location information relating to a mobile device 1; a translation service broker to translate content from a network server 5 into a form more compatible with a mobile device 1; a push engine to push content to a mobile device 1; and a commerce broker to provide electronic commerce services to a mobile device 1.

The NSM subsystem 26 includes a Web server and a proxy, as described further below. The proxy proxies requests and responses between the network servers and the mobile clients. The NSM subsystem 26 is also responsible for invoking one or more of the applications and/services, when appropriate, to enhance at least some of the requests from mobile devices 1 and responses from network servers 5.

The SSM subsystem 27 manages data relating to the mobile subscribers (i.e., users of mobile devices 1) and their subscriptions to wireless services and also manages the applications and services to which the subscribers have access. The DSM subsystem 28 enables and controls access by entities external to the MSP 2 to subscriber-related information maintained in the MSP 2. For example, the DSM subsystem 28 may allow an operator-unique asset such as an operator's billing system to be accessible to external entities over an IP network. The OA&M subsystem 29 enables various administrative operations to be performed on the MSP, as described further below.

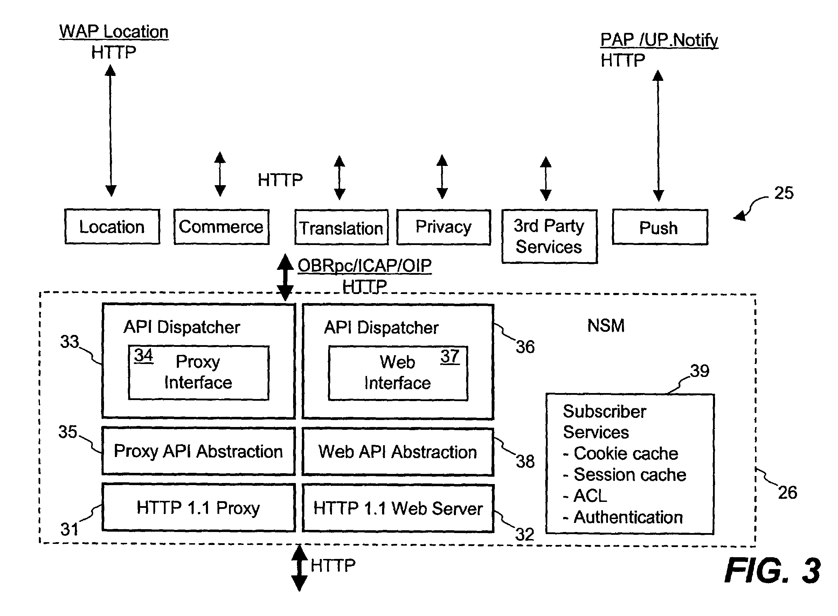

The various components of the MSP 2 will now be described in greater detail with reference to Figures 3 through 5. The NSM subsystem 26 has the ability to create policy definitions, which can be consumed by third party proxies and network elements. This allows for creation of comprehensive service package definitions across all components of the system. Additionally, it allows the MSP 2 to be the key enabler for delivery of new types of network services (e.g. personalized content transcoding, location etc.), which are currently not a part of the *de facto* IP network/transport layer.

Figure 3 shows the NSM subsystem 26 in greater detail in relation to various service modules, according to certain embodiments of the invention. The NSM subsystem 26 may communicate with the service modules 25 using any of various protocols operating over HTTP, such as Internet Calendar Access Protocol (ICAP) or a proprietary protocol. As illustrated, the NSM subsystem 26 includes a proxy 31, and a Web server 32. The proxy 31 is to proxy requests and responses between the mobile devices and the network servers. In most scenarios, the proxy 31 will act as the entry point into the NSM subsystem 26. It can be a generic HTTP 1.1 compliant proxy, for example, such as the Apache Proxy or the Cisco Content Optimization Engine (COE) Proxy. The Web server 32 can be an HTTP 1.1 compliant Web server, such as Apache.

The NSM subsystem 26 also includes: an application program interface (API) dispatcher 33 that includes a proxy interface 34; a proxy API abstraction 35; another API dispatcher 36 that includes a Web interface 37; and a Web API abstraction 38. The API Dispatcher layer 33 and 36 is where each outgoing request is tapped. Service and policy decisions made here determine what needs to be done with the request. The API abstractions 35 and 38 are to ensure that the NSM subsystem 26 is not dependent on a specific proxy or Web server.

The NSM subsystem 26 also includes a set of NSM subscriber service modules 39 to provide subscriber services that enhance requests or responses in a manner tailored for individual mobile (client) devices 1. The NSM subscriber service modules 39 are the "value add" component of the NSM subsystem 26. The services may include, for example, adding basic authentication information or other subscriber information to requests, adding cookies in the response path, and/or adding other types of information to requests or responses.

The NSM subscriber service modules 39 are not to be confused with the service modules 25 shown in Figures 2 and 3. The service modules 25 provide the core of the functionality that makes the MSP a "Value Add Intermediary". A few examples of service modules 25 are a location service broker, translation service broker, content push, and commerce broker. Each of the service modules 25 may support one or more of the following types of MSP APIs: proxy path, internal origin server based, third-party origin server based, and standards based.

With the proxy path APIs, the service modules can be invoked in the proxy request/response path. In the request path the value add information (e.g., location information) will be added to the request headers. Value added services such as transcoding can also be provided in response path.

With the internal origin server based APIs, certain components or applications can have access to interfaces into the service modules using, for example, Simple Object Access Protocol (SOAP) or a proprietary protocol. This ensures enhanced and faster access to the services offered by the service modules. An example of this is a unified messaging (UM) application accessing the translation server to have mail content transcoded.

With the third-party origin server-based (mPriv Style) APIs, third-party network applications can make network-initiated queries into the MSP to use the functionality of the service modules. For example, applications can use the mPriv Style of developer APIs to use the functionality of the commerce broker or to get the location of a user.

With the standards based APIs, each service module can support any standards based protocol specific to its domain. For example, the location broker module may support WAP Location Protocol, the push module may support PAP, etc.

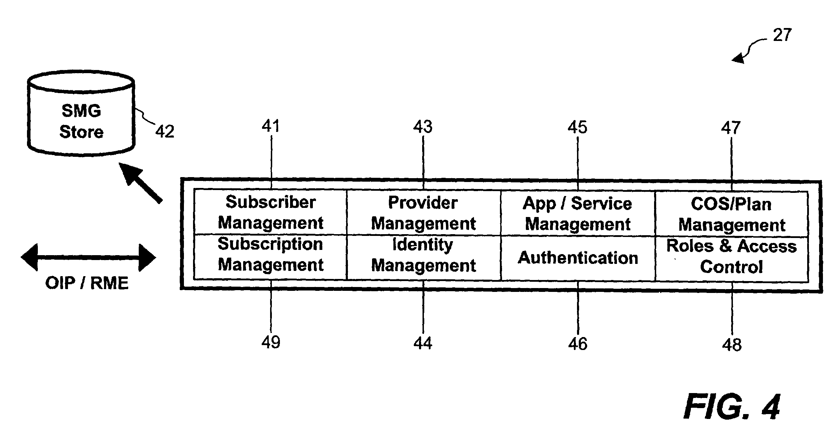

The SSM subsystem 27 will now be described in greater detail. The SSM subsystem can be viewed as the Network Operating System for the CSP. Figure 4 shows the SSM subsystem 27 according to certain embodiments of the invention. As shown, the SSM subsystem 27 includes a subscriber management (SMG) module 41, a subscriber database ("SMG store") 42 to store subscriber data, a provider management module 43, an identity management module 44, an application/service management module 45, an authentication module 46, a COS/Plan management module 47, and a roles & access control module 48, and a subscription management module 49.

The SMG module 41 provides access to subscriber data in the SMG store 42, which may be shared by one or more applications. For storage, the Openwave LDAP Directory from Openwave Systems Inc. of Redwood City, California may be used. The SMG module 41 provides APIs for user lifecycle management, i.e., creation, deletion and updates.

The subscription management module 49 manages the association of a subscriber to a class of service (COS) or service. It also allows the CSP to define "plans" for its subscribers. Plans are the mechanism through which the CSP defines how and what COS of service is provided to a subscriber.
Activation and deactivation of subscribers is also handled in this module.

The provider management module 43 enables an entity external to the MSP 2 to perform functionality of the SSM subsystem 27 for a particular subset of the mobile devices 1. In particular, this module allows a "Root Provider" or CSP to configure "Sub-Providers" or "Partners", who in turn can own an manage a section of the subscriber population.

The identity management module 44 gives the ability to identify a subscriber using an identity other than the Global ID (GID) used in the SMG module 41 (e.g. e-mail, MSISDN, NAI etc.). These identities are referred to as application-specific identities (ASIDs). The identity management module 44 provides the ability to map between these identities and the GID. The identity management module 44 thus identifies a subscriber by mapping an identity of the subscriber provided by an external entity (an ASID) to an identity in an MSP-internal canonical format and then associating the identity in the canonical format with the subscriber.

The application/service management module 45 provides application lifecycle management, including allowing the CSP to define the set of applications and services to which its subscribers have access. The authentication module 46 provides for "single sign-on", by which a subscriber is authenticated once and then can use multiple different applications and services. The COS/Plan management module 47 allows the CSP to define Plans and COS values. The roles & access control module 48 allows for Definition of access control and roles for operators, including access control list (ACL) management and evaluation.

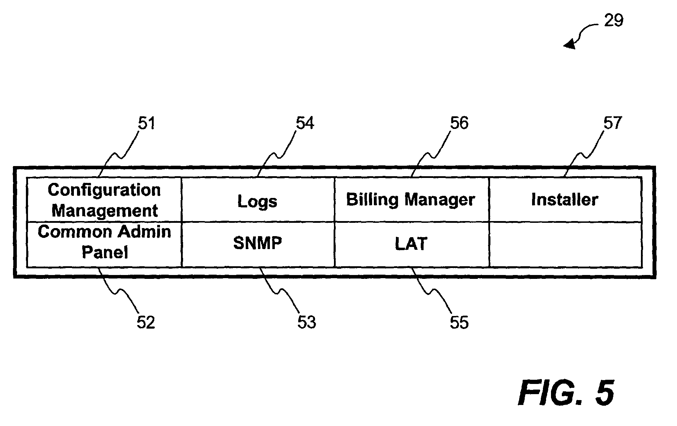

Figure 5 shows the OA&M subsystem 29 of the MSP 2 in greater detail, according to certain embodiments of the invention. As shown, the OA&M subsystem 29 includes a configuration manager 51 to configure services and features for the mobile clients, and a common administrative panel 52, which is a "pluggable" graphical user interface to allow a network administrator to configure services and features for the mobile clients. The administrative panel 52 allows the administrative functionality of new services and applications to register as they become available. The OA&M subsystem 29 also includes a Simple Network Management Protocol (SNMP) monitoring module 53 that provides for a common SNMP based monitoring of the system health. In addition, the OA&M subsystem 29 includes: a logging module 54 that provides consistent format and levels of logging across all components; a local access terminal (LAT) tool 55 to allow determination of system usage; a billing manager 56 to log billable events in a standard format for all components; and an installer 57 to provide a consistent installation scheme for all the components.

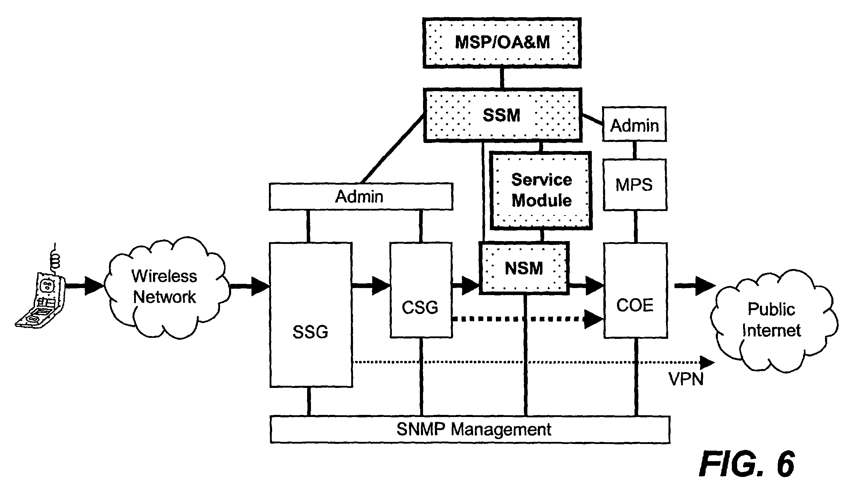

Figure 6 illustrates an example of how the MSP 2 can be implemented in a network environment. In addition to the MSP components described above, the illustrated network configuration includes a service selection gateway (SSG), a content services gateway (CSG) and a content optimization engine (COE).
The SSG provides a Remote Authentication Dial-In User Service (RADIUS) proxy to the Home Agent and other elements of the wireless network 3 for both Simple IP and Mobile IP authentication, while offering service selection management and policy-based traffic direction for the subscribers. The SSG also correlates access-requests, access-accepts and accounting start/stop. The CSG provides uniform resource locator (URL) based billing and switching. The COE provides a content transcoding and caching engine. The functionality of the SSG, CSG and COE are available in devices manufactured by Cisco Systems of San Jose, California. The mobile platform server (MPS) is a third-party content adaptation server, such as is available from Brience, Inc. of San Francisco, California.

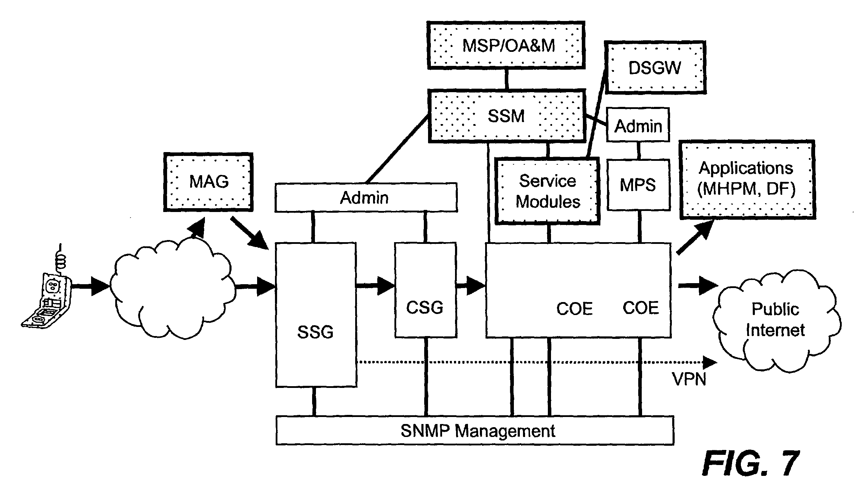

Figure 7 shows a variation of the architecture shown in Figure 6 as another example of how the MSP can be implemented in a network environment. In this embodiment, certain components of the NSM subsystem (e.g., the subservices) are service enablers for the COE. This integration tends to reduce the total cost of ownership for the CSP as well as providing a better end-to-end response time. In this configuration, a developer service gateway (DSGW) publishes and provides to third-party applications access to the MSP's service module APIs. A mobile access gateway (MAG) provides to 3G and WAP-compliant mobile devices access into the MSP 2.

It will be recognized that the various elements of the MSP described above and other features described above may be implemented in the form of software executing on a general-purpose computer, or in the form of special-purpose hardware, or a combination thereof. In a software based embodiment, the element is provided in the form of computer instructions stored in, and executed from, a storage medium (such as random access memory, read-only memory, a mass storage device such as a CD- or DVD-based medium, or a combination thereof), to provide the described functionality.

Thus, an MSP to enable mobile clients on a wireless network to access network servers on a wireline computer network has been described. Although the present invention has been described with reference to specific exemplary embodiments, it will be recognized that the invention is not limited to the embodiments described, but can be practiced with modification and alteration within the spirit and scope of the appended claims. Accordingly, the specification and drawings are to be regarded in an illustrative sense rather than a restrictive sense.

## Claims

1. A mobile services platform to enable a plurality of mobile clients operating on a wireless telecommunications network to access one or more network servers operating on a wireline computer network, the mobile clients used by a plurality of subscribers of wireless telecommunications services, the mobile services platform comprising:
a data communications interface to the wireline computer network;
a data communications interface to the wireless telecommunications network;
a set of application modules to provide applications for execution during communications between the mobile clients and the network servers in response to requests from the mobile clients to access the applications;
a set of service modules to provide services to be automatically invoked during communications between mobile clients and the network servers;
a network services management (NSM) subsystem including a proxy to proxy requests and responses between the network servers and the mobile clients;
a subscriber and service management (SSM) subsystem to manage data relating to the subscribers and subscriptions of the subscribers and to determine the applications and services to which the subscribers have access; and
an administration subsystem to enable administrative operations to be performed on the mobile services platform.

2. A mobile services platform as recited in claim 1, wherein the wireline computer network is the Internet.

3. A mobile services platform as recited in claim 1, further comprising a developer services management (DSM) subsystem to enable and control access by external entities to subscriber-related information maintained in the mobile services platform.

4. A mobile services platform as recited in claim 1, wherein the NSM subsystem further is to enhance at least some of the requests and responses by invoking one or more of the services.

5. A mobile services platform as recited in claim 1, wherein the NSM subsystem further comprises a web server.

6. A mobile services platform as recited in claim 5, wherein the NSM is to enhance the requests by adding subscriber information to the requests.

7. A mobile services platform as recited in claim 5, wherein the NSM is to enhance the requests or responses by adding authentication information to the requests or responses.

8. A mobile services platform as recited in claim 1, wherein the set of applications comprises a home page manager to enable control of a home page of the subscribers.

9. A mobile services platform as recited in claim 1, wherein the set of applications comprises a download module to enable features and functionality to be downloaded to mobile clients.

10. A mobile services platform as recited in claim 1, wherein the set of services comprises a location service broker to provide location information relating to a mobile client.

11. A mobile services platform as recited in claim 1, wherein the set of services comprises a translation service broker to translate content from a network server into a form more compatible with a mobile client.

12. A mobile services platform as recited in claim 1, wherein the set of services comprises a content push engine to push content to a mobile client.

13. A mobile services platform as recited in claim 1, wherein the set of services comprises a commerce broker to provide electronic commerce services to a mobile client.

14. A mobile services platform as recited in claim 1, wherein the administration subsystem comprises a user interface module to generate a user interface that enables a system administrator to perform administrative operations relating to the subscribers and the mobile services platform.

15. A mobile services platform as recited in claim 14, wherein the administration subsystem further comprises a billing manager to log billable events for the mobile services platform.

16. A mobile services platform as recited in claim 14, wherein the administration subsystem further comprises a configuration manager to configure services and features for the mobile clients.

17. A mobile services platform as recited in claim 1, wherein the SSM subsystem comprises a subscriber database to store subscriber data.

18. A mobile services platform as recited in claim 1, wherein the SSM subsystem comprises a provider management module to enable an entity external to the mobile services platform to perform functionality of the SSM subsystem for a subset of the plurality of mobile clients.

19. A mobile services platform as recited in claim 1, wherein the SSM subsystem comprises an identity management module to identify a subscriber by;
mapping an identity of said subscriber provided by an external entity to an identity represented in a canonical format; and
associating the identity in the canonical format with the subscriber.

20. A mobile services platform as recited in claim 1, wherein the SSM subsystem comprises an authentication module to enable a subscriber to be authenticated and authorized to use a plurality of said applications and services.

21. A mobile services platform to enable a plurality of mobile clients operating on a wireless telecommunications network to access one or more network servers operating on the Internet, the mobile clients used by a plurality of subscribers of wireless telecommunications services, the mobile services platform comprising:
a data communications interface to the Internet;
a data communications interface to the wireless telecommunications network;
a set of application modules to provide applications for execution during communications between the mobile clients and the network servers in response to requests from the mobile clients to access the applications;
a set of service modules to provide services for invocation during communications between mobile clients and the network servers without requiring any request for said services from the mobile clients;
a network services management (NSM) subsystem including a proxy, to proxy requests and responses between the network servers and the mobile clients, and to enhance at least some of the requests and responses by invoking one or more of the services;
a subscriber and service management (SSM) subsystem to manage data relating to the subscribers and subscriptions of the subscribers and to manage the applications and services to which the subscribers have access;
a developer services management (DSM) subsystem to enable and control access by external entities to subscriber-related information maintained in the mobile services platform; and
an administration subsystem to enable administrative operations to be performed on the mobile services platform.

22. A mobile services platform as recited in claim 21, wherein the NSM subsystem further comprises:
a web server; and
a subscriber service to enhance at least some of the requests or responses in a manner configured for an individual one of the mobile clients.

23. A mobile services platform as recited in claim 22, wherein the subscriber service is to enhance the requests by adding subscriber information to the requests.

24. A mobile services platform as recited in claim 22, wherein the subscriber service is to enhance the requests or responses by adding authentication information to the requests or responses.

25. A mobile services platform as recited in claim 22, wherein the subscriber service is to enhance at least some of the requests or responses by adding subscriber information and authentication information to the requests or responses.

26. A mobile services platform as recited in claim 21, wherein the set of applications comprises:
a home page manager to enable control of a home page of the subscribers; and
a download module to enable features and functionality to be downloaded to mobile clients.

27. A mobile services platform as recited in claim 21, wherein the set of services comprises at least one of:
a location service broker to provide location information relating to a mobile client;
a translation service broker to translate content from a network server into a form more compatible with a mobile client;
a push engine to push content to a mobile client; and
a commerce broker to provide electronic commerce services to a mobile client.

28. A mobile services platform as recited in claim 21, wherein the administration subsystem comprises:
a user interface module to generate a user interface that enables a system administrator to perform administrative operations relating to the subscribers and the mobile services platform;
a billing manager to log billable events for the mobile services platform; and
a configuration manager to configure services and features for the mobile clients.

29. A mobile services platform as recited in claim 21, wherein the SSM subsystem comprises:
a subscriber database to store subscriber data;
a provider management module to enable an entity external to the mobile services platform to perform functionality of the SSM subsystem for a subset of the plurality of mobile clients;
an identity management module to identify a subscriber by mapping an identity of the subscriber provided by an external entity to an identity in a canonical format and associating the identity in the canonical format with the subscriber; and
an authentication module to enable a subscriber to be authenticated and authorized to use a plurality of said applications and services.
